# EUROPÄISCHE PATENTSCHRIFT

(11) **EP 0 996 567 B1**
(45) Veröffentlichungstag und Bekanntmachung des Hinweises auf die Patenterteilung: **14.11.2001**
(21) Anmeldenummer: 98945020.0
(22) Anmeldetag: 20.07.1998
(51) Int. Cl.: B63H 23/24, H02K 9/10, H02K 9/19

(54) **ELEKTROMOTORISCHER GONDEL-SCHIFFSANTRIEB MIT KÜHLEINRICHTUNG**
ELECTROMOTIVE GONDOLA OR SHIP DRIVE SYSTEM WITH COOLING DEVICE
SYSTEME D'ENTRAINEMENT ELECTROMOTEUR EN NACELLE POUR NAVIRE AVEC DISPOSITIF DE REFROIDISSEMENT

(30) Priorität: 21.07.1997 DE 19731816; 05.06.1998 DE 19826229
(43) Veröffentlichungstag der Anmeldung: 03.05.2000
(73) Patentinhaber: SIEMENS AKTIENGESELLSCHAFT, 80333 München (DE)
(72) Erfinder: SCHÜRING, Ingo, D-10715 Berlin (DE)
(86) Internationale Anmeldenummer: DE9802053
(87) Internationale Veröffentlichungsnummer: WO9905024

(56) Entgegenhaltungen:
- EP-A- 0 493 704
- WO-A-97/09771
- DE-A- 1 638 276
- DE-C- 683 970
- GB-A- 739 896
- US-A- 3 936 681
- US-A- 5 101 128
- US-A- 5 403 216
- ANDERSEN PETER; GRAGEN UWE: "New Type of Permanent Field Machines for diesel electric propulsion systems" SIEMENS-SCHOTTEL-PROPULSOR (SSP) THE PODDED ELECTRIC DRIVE WITH PERMANENTLY EXCITED MOTOR,7. März 1997, Seiten A/B, 1-24, XP000198528

## Beschreibung

Die Erfindung liegt auf dem Gebiet der Schiffsantriebe und ist bei der konstruktiven Ausgestaltung einer elektromotorischen Antriebseinrichtung anzuwenden, deren aus Stator und Rotor bestehender Elektromotor zum Zwecke des direkten Antriebes wenigstens eines Propellers gondelartig mittels eines schachtartigen Tragteiles an der Unterseite eines Schiffsrumpfes in einem strömungsgünstig gestalteten Gehäuse angeordnet ist und bei der Teile des Elektromotors künstlich gekühlt werden.

Bei einem bekannten Schiffsantrieb dieser Art ist als Motor ein dreiphasiger Wechselstrommotor mit einem Kurzschlußläufer verwendet, wobei der Läufer auf einer Hohlwelle aufsitzt, die ihrerseits über eine Kupplung mit der innerhalb der Hohlwelle verlaufenden Antriebswelle gekoppelt ist. Die Antriebswelle ist ihrerseits direkt mit dem Propeller gekoppelt. Bei diesem Schiffsantrieb ist der Stator des Motors in einen rohrförmigen Rahmen eingepaßt, der seinerseits in ein rohrsattelartiges Gehäuseteil des an der Unterseite des Schiffsrumpfes gondelartig mittels eines schachtartigen Tragteiles befestigten Gehäuses eingefügt ist. Die Kühlung des Motors einschließlich der Lager des Läufers erfolgt mit Frischwasser, das aus einem im Schiffsrumpf angeordneten Tank in das Innere des gondelartig angeordneten Gehäuses gepumpt und im Kreislauf geführt wird (US 2,714,866 A).

Bei einem anderen bekannten Schiffsantrieb dieser Art, der für Antriebsleistungen von 10 MW und mehr ausgelegt werden kann, stützt sich der dynamoelektrische Motor mit seinem Stator über radial angeordnete Stegbleche in dem umgebenden Gehäuse ab; die hierzu verwendeten Stegbleche dienen zugleich zur Ausbildung von Kühlkanälen für ein aus dem Schiffsrumpf heraus zugeführtes und dort mittels eines Wärmetauschers rückgekühltes gasförmiges Kühlmittel. Die aufwendige Kühleinrichtung ist dabei auf dem schachtartigen Tragteil angeordnet. - Als Motor wird üblicherweise ein umrichtergespeister Synchronmotor mit einem fremderregten Läufer verwendet, wobei der Läufer durch Anordnung auf der hohl ausgebildeten, von Wasser durchströmten Antriebswelle zusätzlich gekühlt werden kann (US 5, 403, 216 A).

Zur Kühlung eines unter Wasser betriebenen Elektromotors ist es im übrigen bekannt, das als Kühlmittel verwendete Isolieröl so im Kreislauf zu pumpen, daß es in Kühlkanälen, die axial im Bereich der Gehäusewandung verlaufen, Wärme an das umgebende Wasser abgibt (US 2,862,122 A).

Es ist weiterhin an sich bekannt, für den Kühlkreis einer im Schiffsrumpf angeordneten Antriebsmaschine eines Schiffes einen Wärmetauscher zu verwenden, der in den Mantelring des Propellers integriert ist (GB 2 260 805 A).

Ausgehend von einer elektromotorischen Antriebseinrichtung für ein Schiff mit den Merkmalen des Oberbegriffes des Patentanspruches 1 (US 5,403,216) liegt der Erfindung die Aufgabe zugrunde, Anordnung und Ausgestaltung des Kühlers zu vereinfachen.

Zur Lösung dieser Aufgabe ist gemäß der Erfindung vorgesehen, daß der Kühler aus einem unterhalb des Schiffsrumpfes und innerhalb des schachtartigen Tragteiles an dessen Wandung angeordneten ringförmigen Kanal besteht, der mit Öffnungen zum Eintritt und Austritt des Kühlmittels versehen ist.

Die Erfindung sieht also vor, die Wandung des schachtartigen Tragteiles selbst als Teil eines Kühlers zu verwenden, und zwar als wärmeübertragendes Element zur Rückkühlung des Kühlmittels durch das umgebende Seewasser. Zur Optimierung der Kühlleistung sollten zusätzliche Kühlrippen vorgesehen sein, die in den ringförmigen Kanal hineinragen und mit der Wandung des Tragteiles verbunden sind.

Eine derartige Anordnung und Ausgestaltung des Kühlers ist platz- und gewichtssparend und vermeidet eine flexible Kopplung zwischen verschiedenen Teilen der Kühleinrichtung, die einerseits dem drehbaren Teil der Antriebseinrichtung und andererseits dem Schiffskörper zugeordnet sind.

Die gemäß der Erfindung vorgesehene Ausgestaltung und Anordnung des Kühlers ist besonders für Schiffsantriebe geeignet, wie sie in der älteren Patentanmeldung PCT/DE 97/01292 vom 24.06.1997/Prioritätsanmeldung DE 196 27 323.4 beschrieben sind und die sich dadurch auszeichnen, daß der Elektromotor mit einem permanentmagneterregten und daher verlustarmen Rotor ausgestattet ist, daß der Stator formschlüssig in das strömungsgünstig gestaltete Gehäuse eingepaßt ist und daß der Innenraum des den Elektromotor aufnehmenden Gehäuses frei von einem strömenden Kühlmittel ist. Diese Ausgestaltung des Elektromotors ermöglicht bei entsprechender Ausnutzung eine direkte Kühlung allein durch das umgebende Seewasser. Verlustwärme, die bei höherer Ausnutzung in Abhängigkeit von der Auslegung des Elektromotors in den Wickelköpfen, im Ständereisen und/oder im Wicklungskupfer im Blechpaketbereich des Stators entstehen kann und die nicht über das Gehäuse direkt an das umgebende Seewasser abgeführt werden kann, muß mit Hilfe eines zusätzlichen Kühlers abgeführt werden. Das Abführen dieser Verlustwärme kann vorteilhaft mit einem gemäß der Erfindung ausgestalteten Kühler erfolgen, indem Kühlrohre von dem ringartigen Kühlkanal zu den Wickelköpfen des Stators und gegebenenfalls auch zu in Umfangsrichtung gleichmäßig verteilt angeordneten axialen Kühlkanälen im Stator führen.

Ein Ausführungsbeispiel einer elektromotorischen Antriebseinrichtung mit einem gemäß der Erfindung ausgebildeten Kühler ist in den Figuren 1 bis 5 dargestellt. Dabei zeigt
- Figur 1: in schematischer Darstellung die Zuordnung des Kühlers zur Antriebseinrichtung,
- Figur 2 und 3: den ringförmigen Kanal des Kühlers in Ansicht und Querschnitt,
- Figur 4: die Zuordnung von Kühlrohren zu den Wickelköpfen und
- Figur 5: die Anordnung von Kühlkanälen im Blechpaket des Stators.

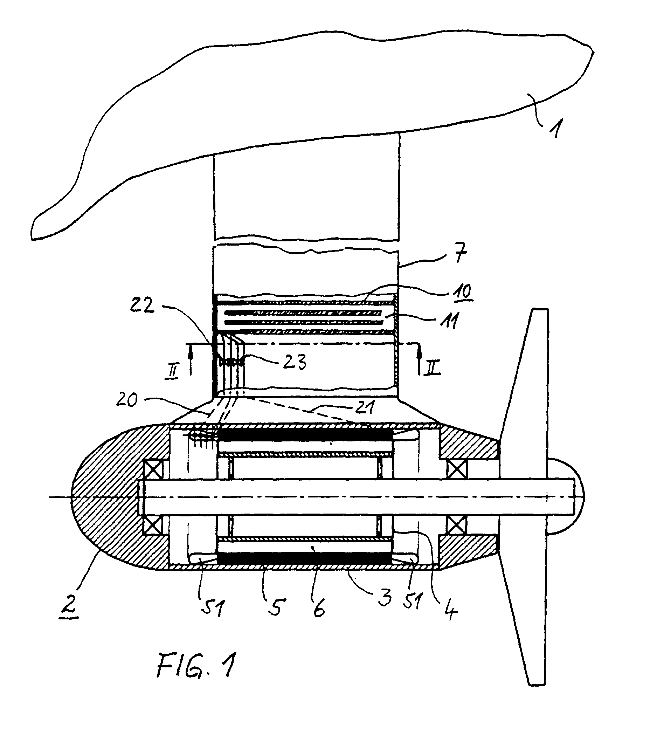

Figur 1 zeigt in schematischer Darstellung einen Teil eines Schiffsrumpfes 1, in dessen Heckbereich eine elektromotorische Antriebseinrichtung angeordnet ist. Hierzu befindet sich ein aus Stator 5 und permanentmagneterregtem Rotor 6 bestehender Elektromotor 4 in einem strömungsgünstig gestalteten Gehäuse 2, wobei der Stator in das rohrförmige Gehäuseteil 3 eingepaßt ist. Das Gehäuse 2 mit dem Elektromtor 4 ist über ein schachtartiges Tragteil 7 am bzw. im Schiffsrumpf 1 befestigt.

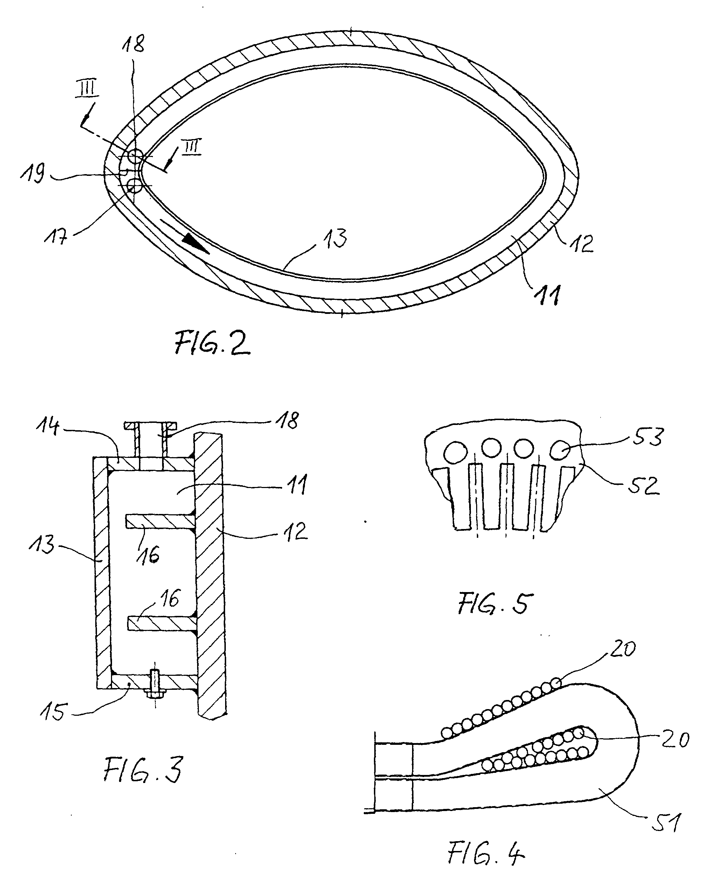

Innerhalb des schachtartigen Tragteiles 7 ist oberhalb des Gehäuses 2 ein Kühler 10 angeordnet, der gemäß den Figuren 2 und 3 im wesentlichen aus einem ringförmigen Kanal 11 besteht, der an der Innenseite der Wandung 12 des Tragteiles 7 angeordnet ist. Der im Querschnitt rechteckige Kühlkanal wird einerseits von der Wandung 12 des Tragteiles 7, dann von einer oberen und einer unteren Querwand 14 bzw. 15 und einer inneren Wandung 13 gebildet. In diesen ringförmigen Kanal ragen noch Kühlrippen 16 hinein, die von der Wandung 12 ausgehen. Der in Umfangsrichtung des Tragteiles 7 verlaufende Kühlkanal 11 ist an einer Stelle durch eine Trennwand 19 unterbrochen und beidseits der Trennwand sind eine Eintrittsöffnung 17 und eine Austrittsöffnung 18 für ein flüssiges Kühlmittel angeordnet.

Gemäß Figur 1 gehen von der Eintrittsöffnung 17 und der Austrittsöffnung 18 Kühlrohre 20 zu den Wickelköpfen 51 des Stators 5 und Kühlrohre 21 zum Blechpaket 52 des Stators 5. Gemäß Figur 4 sind die Kühlrohre 20 an der Außenseite und im Inneren der Wickelköpfe 51 angeordnet. Gemäß Figur 5 sind im Statorblechpaket 52 in Umfangsrichtung gleichmäßig verteilt angeordnete Kühlkanäle 53 vorgesehen, an die die Kühlrohre 21 angeschlossen werden können.

Zum Umlauf des Kühlmittels ist jeweils eine Pumpe 22 bzw. 23 vorgesehen.

## Patentansprüche

1. Elektromotorische Antriebseinrichtung für ein Schiff,
deren aus Stator und Rotor bestehender Elektromotor mittels eines schachtartigen Tragteiles gondelartig an der Unterseite des Schiffes in einem strömungsgünstig gestalteten Gehäuse angeordnet ist
und die einen Kühler zur Rückkühlung eines im Kreislauf geführten Kühlmittels zur Kühlung von Teilen des Elektromotors aufweist,
**dadurch gekennzeichnet,**
**daß** der Kühler (10) aus einem unterhalb des Schiffsrumpfes (1) und innerhalb des schachtartigen Tragteiles (7) an dessen Wandung (12) angeordneten ringförmigen Kanal (11) besteht,
der mit Öffnungen (17,18) zum Eintritt und Austritt des Kühlmittels versehen ist.

2. Antriebseinrichtung nach Anspruch 1,
bei der in den ringförmigen Kanal (11) Kühlrippen (16) hineinragen, die mit der Wandung (12) des Tragteiles (7) verbunden sind.

3. Antriebseinrichtung nach Anspruch 1 oder 2,
bei der der Rotor (6) des Elektromotors als permanentmagneterregter Rotor ausgebildet ist,
bei der weiterhin der Stator (5) des Elektromotors formschlüssig in das strömungsgünstig gestaltete Gehäuse (2,3) eingepaßt ist
und bei der an den ringförmigen Kanal (11) des Kühlers Kühlrohre (20) zur Kühlung der Wickelköpfe (51) des Stators angeschlossen sind.

4. Antriebseinrichtung nach Anspruch 3,
bei der an den ringförmigen Kühlkanal (11) weitere Kühlrohre (21) angeschlossen sind, die an in Umfangsrichtung gleichmäßig verteilt angeordnete axiale Bohrungen (53) des Stators angeschlossen sind.

## Claims

1. Electromotive driving arrangement for a ship, of which arrangement the electric motor, which consists of a stator and a rotor, is disposed on the underside of the ship in a nacelle-like manner in a housing shaped in a manner favourable to flow, by means of a shaft-like carrying part,
and which arrangement has a cooler for re-cooling a coolant, which is guided in a circuit, for cooling parts of the electric motor,
**characterised in that**
the cooler (10) consists of an annular duct (11) which is disposed underneath the ship's hull (1) and inside the shaft-like carrying part (7), on the wall (12) of the said carrying part, and which is provided with apertures (17, 18) for the entry and exit of the coolant.

2. Driving arrangement according to claim 1,
in which cooling ribs (16), which are connected to the wall (12) of the carrying part (7), project into the annular duct (11).

3. Driving arrangement according to claim 1 or 2,
in which the rotor (6) of the electric motor is constructed as a permanent-magnet-excited rotor,
in which, moreover, the stator (5) of the electric motor is fitted in a form-locking manner into the housing (2, 3) which is shaped in a manner favourable to flow,
and in which cooling pipes (20) for cooling the coil ends (51) of the stator are connected to the annular duct (11) of the cooler.

4. Driving arrangement according to claim 3,
in which further cooling pipes (21), which are connected into axial bores (53) in the stator which are disposed so as to be uniformly distributed in the peripheral direction, are connected to the annular cooling duct (11).

## Revendications

1. Système d'entraînement à moteur électrique pour un navire, dont le moteur électrique constitué d'un stator et d'un rotor est disposé en nacelle, au moyen d'un élément porteur du genre puits, sur le dessous du navire dans un carter d'une conception hydrodynamique,
et qui comporte un refroidisseur pour refroidir un réfrigérant circulant en circuit fermé et destiné à refroidir des parties du moteur électrique,
**caractérisé en ce que** le refroidisseur (10) consiste en un canal (11) annulaire disposé sous la coque (1) du navire et à l'intérieur de l'élément (7) porteur du genre puits, sur la paroi (12) de ce dernier, canal qui est pourvu d'ouvertures (17, 18) d'entrée et de sortie du réfrigérant.

2. Système d'entraînement suivant la revendication 1,
dans lequel des nervures (16) de refroidissement, qui sont reliées à la paroi (12) de l'élément (7) porteur, font saillie dans le canal (11) annulaire.

3. Système d'entraînement suivant la revendication 1 ou 2,
dans lequel le rotor (6) du moteur électrique est conçu comme rotor excité par aimant permanent,
dans lequel en outre le stator (5) du moteur électrique est adapté à complémentarité de forme dans le carter (2, 3) d'une conception hydrodynamique,
et dans lequel des tuyaux (20) de refroidissement, destinés à refroidir les tètes (51) de bobine du stator, sont raccordés au canal (11) annulaire du refroidisseur.

4. Système d'entraînement suivant la revendication 3,
dans lequel d'autres tuyaux (21) de refroidissement, qui sont raccordés dans des perçages (53) axiaux du stator disposés en répartition uniforme en direction circonférentielle, sont raccordés au canal (11) annulaire de refroidissement.
